# EUROPEAN PATENT APPLICATION

(11) **EP 4 400 564 A1**
(43) Date of publication of application: **17.07.2024**
(21) Application number: 23151635.2
(22) Date of filing: 13.01.2023
(51) Int. Cl.: C10K 3/00, C01B 3/50, C01B 3/36, C10J 3/66, C10B 53/02

(54) **HYDROGEN PRODUCTION FROM A BIOMASS-BASED SYNTHESIS GAS**

(71) Applicant: Mash Makes A/S, 2100 Copenhagen Ø (DK)
(72) Inventor: ANDERSEN, Jakob Bejbro, 2100 Copenhagen Ø (DK)
(74) Representative: Guardian IP Consulting I/S

(57) **Abstract**

The invention relates to a method of hydrogen production from a biomass-based synthesis gas in a biomass-based hydrogen production system comprising a pyrolysis reactor and a gasification reactor. The method comprises pyrolysing a provided biomass feedstock in a pyrolysis reactor to produce a pyrolysis gas (PG) and a solid pyrolysis char (PC). At least partially oxidizing the pyrolysis gas into a oxidized pyrolysis gas by providing an oxidizing gas and gasifying the pyrolysis char in a gasification reactor using the partially oxidized pyrolysis gas to produce a synthesis gas (SG). The synthesis gas has a high content of hydrogen molecules, *H*₂. The synthesis gas (SG) is separated into two streams, one being a hydrogen-rich stream (H2G) and the other being an off-gas (OG) stream, wherein the off-gas stream comprises hydrogen at a lower concentration than in the hydrogen-rich stream, and other synthesis gas (SG) elements. The method further comprises extracting mechanical energy (ME), electrical energy (EE) and/or thermal energy (TE) from the off-gas (OG) by way of an energy conversion system (ECS), and using said mechanical, electrical, and/or thermal energy (EE and TE) to provide power to the biomass-based hydrogen production system. The invention further relates to a biomass-based hydrogen production system.

## Description

### FIELD OF THE INVENTION

The present invention relates to a method of hydrogen production from a biomass-based synthesis gas, wherein the synthesis gas is produced by pyrolysis.

### BACKGROUND OF THE INVENTION

Two-step pyrolysis and gasification of biomass has proven to be an advantageous method of producing a hydrogen-rich synthesis gas from a biomass feedstock, as for instance described in international patent application WO2023281085 by the present applicant.

Generally, there is an interest in improving the energy efficiency of producing synthesis gas.

Hence, an improved method of producing hydrogen would be advantageous, and in particular a more efficient and/or improved method of hydrogen production from a biomass-based feed stock would be advantageous.

### OBJECT OF THE INVENTION

It is an objective of the present innovation to overcome the presented limitations in the prior art. In particular, it is an objective to provide a more energy-efficient hydrogen production. It is furthermore a particular objective to provide an efficient hydrogen production, based on a biomass feedstock.

It is a further object of the present invention to provide an alternative to the prior art.

### SUMMARY OF THE INVENTION

Thus, the above-described object and several other objects are intended to be obtained in a first aspect of the invention by providing a method of hydrogen production from a biomass-based synthesis gas in a biomass-based hydrogen production system comprising a pyrolysis reactor and a gasification reactor. The method comprises providing a biomass feedstock, and pyrolysing the biomass feedstock in the pyrolysis reactor to produce a pyrolysis gas (PG) and a solid pyrolysis char (PC). The method further comprises at least partially oxidizing the pyrolysis gas into a oxidized pyrolysis gas by providing an oxidizing gas, and gasifying the pyrolysis char in the gasification reactor using the partially oxidized pyrolysis gas to produce a synthesis gas (SG), the synthesis gas having a high content of hydrogen molecules, *H*₂. Additionally, the method comprises separating the synthesis gas (SG) into two streams, one being a hydrogen-rich stream (H2G) and the other being an off-gas (OG) stream, wherein the off-gas stream comprises hydrogen at a lower concentration than in the hydrogen-rich stream and other synthesis gas (SG) elements, and extracting mechanical energy (ME), electrical energy (EE) and/or thermal energy (TE) from the off-gas (OG) by way of an energy conversion system (ECS). Finally, the method comprises using said mechanical, electrical, and/or thermal energy (ME, EE and TE) to provide power to the biomass-based hydrogen production system. In this way, the method simultaneously provides a hydrogen-rich stream as a useful output, while also utilizing the off-gas stream to power part of the production process, such as the gasification or gas separation, or other components or sub-processes in the system. Generally, the off-gas may be seen to power parasitic loads of the gasification system and the gas separation system. This reduces the external energy demand of the production process, thus improving efficiency. Furthermore, utilizing the off-gas in this way helps ensure safe disposal of toxic carbon monoxide content of the off-gas.

Depending on the process parameters, selection of oxidizing gas, etc., the content of hydrogen molecules in the synthesis gas may for instance be at least 10%v, such as at least 20%v, at least 30%v, at least 40%v, at least 50%v, or even higher.

The hydrogen-rich stream H2G may for instance have a content of hydrogen molecules of at least 85%v, such as 90%v, such as 95%v, or even 99.999%v.

The skilled person will realize that separating the synthesis gas into the two streams may be done in multiple ways, such as using pressure swing adsorption (PSA), cryogenic separation, membranes, such as proton membranes, etc.

In an embodiment of the method according to the invention, the energy conversion system (ECS) comprises an internal combustion engine (ICE), and wherein the off-gas is used to fuel the internal combustion engine. In this way, the off-gas is used to produce mechanical work, which may in turn be used to drive a generator for producing electrical energy. Alternatively, the mechanical work may be used directly to power, e.g., a compressor.

In an embodiment of the method according to the invention, the energy conversion system (ECS) comprises a fuel cell (FC), and wherein the off-gas is used to fuel the fuel cell. In this way, the off-gas is used to produce electrical energy from the fuel cell. Optionally, the fuel cell may also provide thermal energy for further exploitation in performing the method.

In an embodiment of the method according to the invention, the energy conversion system (ECS) comprises an organic Rankine cycle (ORC), and wherein a temperature difference between the combusted off-gas and an ambient temperature is utilized to drive the organic Rankine cycle. In this way, electrical and thermal energy may be extracted from even small temperature deviations of the off-gas stream with respect to ambient temperatures.

In an embodiment of the method according to the invention, the energy conversion system (ECS) comprises combusting the off-gas by means of a burner section and utilizing the generated thermal energy for supplying heat to the biomass-based hydrogen production system.

In an embodiment of the method according to the invention, the electrical output (EE) from the energy conversion system is used for powering other electrical systems of the biomass-based hydrogen production system. Such electrical system could comprise feeders of the biomass feedstock and/or the pyrolysis char, or other components such as control units (PLC), servos, compressors, sensors etc.

In an embodiment of the method according to the invention, the pyrolysis reactor and the gasification reactor are separate units. In this way, the different temperature ranges needed for the two processes may conveniently be achieved.

In an embodiment of the method according to the invention, the pyrolysis reactor and the gasification reactor is a combined unit comprising a pyrolysis zone and a gasification zone. In this way, the energy flow, in particular the heat flow, in the process may be utilized efficiently. Thus, an improved energy efficiency is achieved, compared to having separate processes.

In an embodiment of the method according to the invention, the partially oxidized pyrolysis gas is used as primary gasification agent to gasify the pyrolysis char. In this way, the pyrolysis gas produced may be directly used in the gasification process of the pyrolysis char.

In an embodiment of the method according to the invention, the partially oxidized pyrolysis gas is used in conjunction with at least one other gasification agent to gasify the pyrolysis char. In some embodiments, it is advantageous to use a combination of two or more gasification agents, whereof the partially oxidized pyrolysis gas is one.

In an embodiment of the method according to the invention, the at least one other gasification agent comprises steam.

According to a second aspect of the invention, the invention provides a biomass-based hydrogen production system. The system comprises a pyrolysis reactor comprising a biomass feedstock inlet and a pyrolysis gas and char outlet. The pyrolysis reactor is adapted for pyrolysis of a biomass feedstock into a pyrolysis gas and a pyrolysis char. The system further comprises a gasification reactor in communication with the pyrolysis gas and char outlet, the gasification reactor further comprising a synthesis gas outlet. The gasification reactor is adapted for gasification of the pyrolysis char using the pyrolysis gas, to produce a synthesis gas exiting the gasification reactor via the synthesis gas outlet. The system additionally comprises a synthesis gas separator in communication with the synthesis gas outlet, wherein the synthesis gas separator is adapted for separating the synthesis gas into a hydrogen rich stream output via a hydrogen rich stream output, and an off-gas stream output via an off-gas output. The synthesis gas separator is adapted to ensure during operation that the off-gas stream comprises hydrogen at a lower concentration than in the hydrogen rich stream. Finally, the system comprises an energy conversion system connected to the off-gas stream output, wherein the energy conversion system is adapted to generate mechanical energy, electrical energy and/or thermal energy from the off-gas, and for providing said mechanical, electrical, and/or thermal energy to at least partly power the biomass-based hydrogen production system. For instance, the generated energy may be used to power the pyrolysis reactor, the gasification reactor, and/or the synthesis gas separator. In this way, a particularly energy-efficient biomass-based hydrogen production system is achieved, by exploiting the off-gas to produce electrical and thermal energy, and using this energy to at least partly power the biomass-based hydrogen production system itself. The hydrogen rich stream may be further processed e.g. to obtain a desired level of purity.

In an embodiment of the biomass-based hydrogen production system according to the invention, the energy conversion system (ECS) comprises an internal combustion engine (ICE), and wherein the off-gas is used to fuel the internal combustion engine. In this way, the off-gas is used to produce mechanical work, which may in turn be used directly to power, e.g., a compressor, or to drive a generator for producing electrical energy.

In an embodiment of the biomass-based hydrogen production system according to the invention, the energy conversion system (ECS) comprises a fuel cell (FC), and wherein the off-gas is used to fuel the fuel cell. In this way, the off-gas is used to produce electrical energy from the fuel cell. Optionally thermal energy dissipated from the fuel cell may also be utilized in the system.

In an embodiment of the biomass-based hydrogen production system according to the invention, the energy conversion system (ECS) comprises an organic Rankine cycle (ORC), and wherein a temperature difference between the off-gas and an ambient temperature is utilized to drive the organic Rankine cycle. In this way, electrical and thermal energy may be extracted from even small temperature deviations of the off-gas stream with respect to ambient temperatures.

In an embodiment of the biomass-based hydrogen production system according to the invention, the electrical output (EE) from the energy conversion system is used for powering other electrical systems of the biomass-based hydrogen production system. Such electrical system could comprise feeders of the biomass feedstock and/or the pyrolysis char, or other components such as control units (PLC), servos, compressors, sensors etc.

In an embodiment of the biomass-based hydrogen production system according to the invention, the pyrolysis reactor and gasification reactor comprised as a combined reactor, the combined reactor comprising a pyrolysis zone and a gasification zone.

In an embodiment of the biomass-based hydrogen production system according to the invention, the pyrolysis reactor and gasification reactor separated by a oxidization zone, the oxidization zone being adapted for facilitating a partial oxidization of the pyrolysis gas into a partially oxidized pyrolysis gas, substantially before the partially oxidized pyrolysis gas reaches the gasification reactor. In this way, a majority of a content of tar in the pyrolysis gas is decomposed into gas, before or in the gasification reactor.

In an embodiment of the biomass-based hydrogen production system according to the invention, the oxidization zone is comprised by the pyrolysis reactor.

In an embodiment of the biomass-based hydrogen production system according to the invention, the oxidization zone is comprised by the gasification reactor.

In an embodiment of the biomass-based hydrogen production system according to the invention, the oxidization zone is comprised by a conduit connecting the pyrolysis reactor and the gasification reactor.

The first and second aspects of the present invention may be combined. These and other aspects of the invention will be apparent from and elucidated with reference to the embodiments described hereinafter.

### BRIEF DESCRIPTION OF THE FIGURES

The method of hydrogen production and the hydrogen production system according to the invention will now be described in more detail with regard to the accompanying figures. The figures show one way of implementing the present invention and is not to be construed as being limiting to other possible embodiments falling within the scope of the attached claim set.
Figures 1A and 1B are flow-charts illustrating embodiments of the method of hydrogen production according to the invention,
Figure 2 illustrates embodiments of pyrolysing the biomass feedstock and oxidizing the pyrolysis gas,
Figure 3 illustrates the gasifying step of the method,
Figure 4 schematically illustrates an embodiment of the biomass-based hydrogen production system according to the invention,
Figure 5 schematically illustrates another embodiment of the system according to the invention, and
Figure 6 schematically illustrates other embodiments of the system according to the invention.

### DETAILED DESCRIPTION OF AN EMBODIMENT

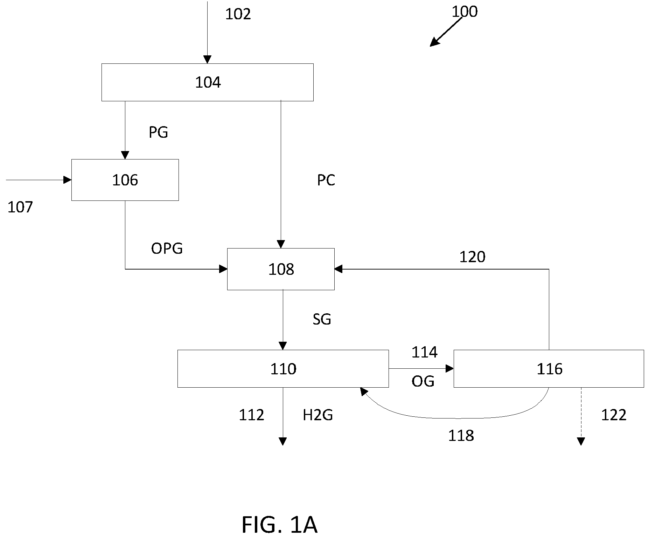

Figure 1A is a flow-chart illustrating an embodiment of the method of hydrogen production from a biomass-based synthesis gas 100 in a biomass-based hydrogen production system. Initially, biomass feedstock is provided 102, such as residues from cultivating wheat, corn, sugar, tobacco, or palm oil. The biomass feedstock is pyrolysed 104 in a pyrolysis reactor, to produce both a pyrolysis gas PG and a solid pyrolysis char PC. The pyrolysis gas PG is oxidized 106, at least partially, into a partially oxidized pyrolysis gas OPG by providing an oxidizing gas 107. The partially oxidized pyrolysis gas OPG is used to gasify 108 the pyrolysis char PC to produce a synthesis gas SG. Depending on the process parameters, selection of oxidizing gas, etc., the content of hydrogen molecules in the synthesis gas may for instance be at least 10%v, such as at least 20%v, at least 30%v, at least 40%v, at least 50%v, or even higher. The synthesis gas is then separated 110, using a separator, into a hydrogen-rich stream 112/H2G and an off-gas stream 114/OG. The hydrogen-rich stream H2G comprises gas with a hydrogen content that is significantly higher than the off-gas stream OG. For instance, the hydrogen-rich stream H2G may have a content of hydrogen molecules of at least 85%v, such as 90%v, such as 95%v, or even 99.999%v. The off-gas stream OG typically comprises a mix of gaseous components, such as CO, CO2, CH4, N2, and even H2. The exact mix will depend on the particular biomass feedstock used for the process, the operating parameters, etc. Thus, the off-gas stream typically comprises both flammable and inert gas components, and may therefore be used for generating electrical and thermal energy 116 using an energy conversion system ECS. One or both of the generated electrical and thermal energy 118 is then used as an energy source for the biomass-based hydrogen production system, here illustrated by providing energy for the gas separation 110 and the gasification 108. However, the energy may be provided to any components of the system. If more energy is produced than needed to power the biomass-based hydrogen production system, this surplus energy may be exported 122 to an energy offtaker. After separating 110 the synthesis gas, the hydrogen-rich stream 112 may be output to a H2 offtaker.

The energy conversion system may for example comprise an internal combustion engine ICE, a fuel cell, or an organic Rankine Cycle. The inventors envision that many other types of energy conversion systems may be useful as part of the invention, as long as such an energy conversion system is adapted to generate electric and thermal energy from the content of the off-gas stream.

In a particular example of the biomass-based hydrogen production system, the energy conversion system comprises an internal combustion engine fueled by the off-gas, and used to drive a generator for producing electrical power.

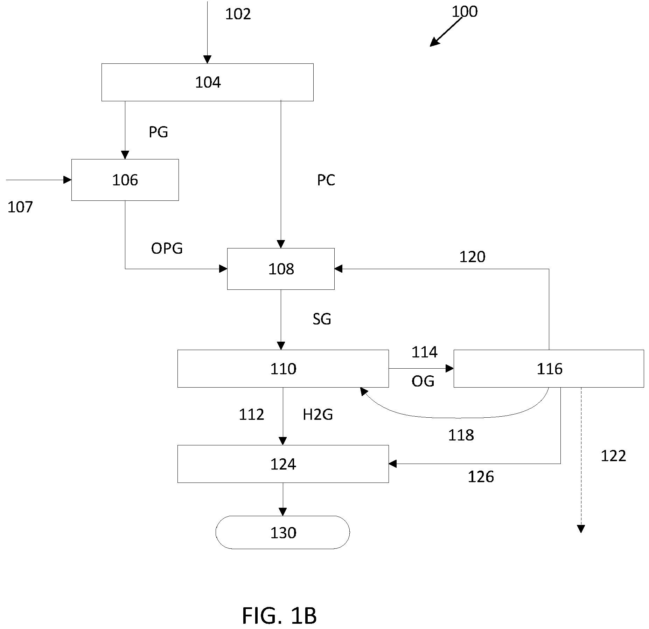

Figure 1B illustrates an embodiment of the method similar to the flow-chart illustrated in figure 1A, where like reference numerals refer to like parts. Thus, only the differences will be described here. In this embodiment of the method according to the invention, the hydrogen-rich output stream 112 is further compressed 124 in a compressor, before the hydrogen-rich gas is output 130 for an H2 offtaker. In this embodiment, the energy conversion system ECS may also provide any surplus electrical and/or thermal energy to help power compressing 126 the hydrogen-rich output stream, not just to the separation 120 or energy offtaker 122.

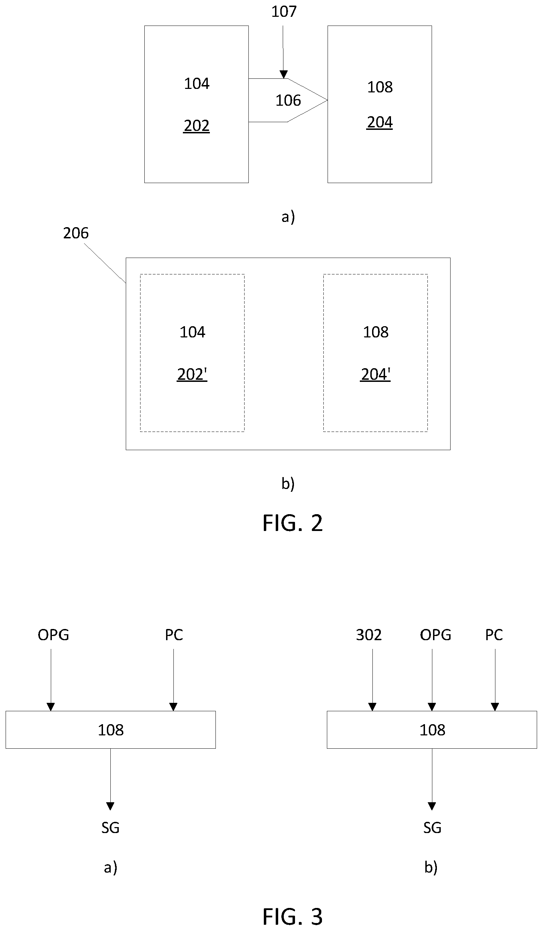

Figure 2a and 2b illustrates two embodiments of pyrolysing the biomass feedstock and gasifying the pyrolysis char. Figure 2a shows that pyrolysing 104 the biomass feedstock occurs in a pyrolysis reactor 202 that is separate from a gasification reactor 204 in which gasification 108 of the pyrolysis char PC takes place. Between the two reactors 202, 204, partial or full oxidation 106 of the pyrolysis gas occurs by providing an oxidizing gas 107. In figure 2b, the same processes of pyrolysis 104 and gasification 108 occurs, but in a combined reactor 206. In the reactor 206, pyrolysis 104 occurs in a pyrolysis zone 202', while gasification 108 occurs in a gasification zone 204'. Since the pyrolysis gas contains both CO2 and H2O, the heat present in the combined reactor 206 will lead to some conversion to CO and H2, even without providing an oxidizing gas from the outside. However, an oxidizing gas 107 may also optionally be provided to the combined reactor 206 in this embodiment.

Figure 3a illustrates that the partially oxidized pyrolysis gas OPG is used as the primary gasification agent to gasify 108 the pyrolysis char PC, thus producing the synthesis gas SG. Figure 3b shows an embodiment wherein the partially oxidized pyrolysis gas OPG is used together with a second gasification agent 302 to gasify 108 the pyrolysis char PC and produce the synthesis gas SG.

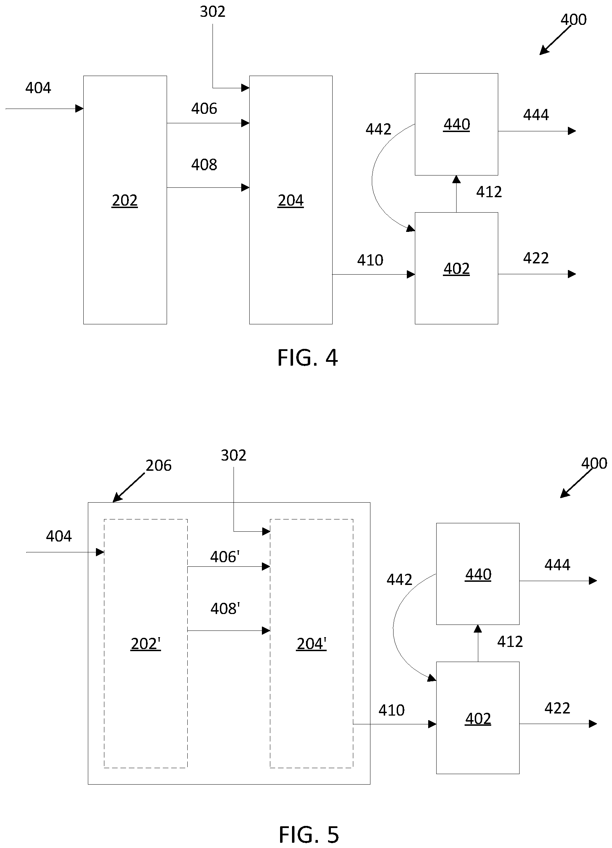

Figure 4 illustrates an embodiment of the biomass-based hydrogen production system 400 according to the invention, comprising a pyrolysis reactor 202, a gasification reactor 204, a gas separator 402, and an energy conversion system 440. The pyrolysis reactor 202 comprises a biomass feedstock inlet 404, a pyrolysis gas outlet 406, and a pyrolysis char outlet 408. The pyrolysis gas outlet 406 and the pyrolysis char outlet 408 are both connected as inlets to the gasification reactor 204. Optionally, a second gasification agent 302 may be injected in the gasification reactor 204. In the gasification reactor 204 the synthesis gas SG is produced, as shown in fig. 3. The synthesis gas SG comprises a high ratio of hydrogen, but also other gaseous components such as CO, CO2, CH4, and N2. From the gasification reactor 204 a gas outlet 410 is connected as an inlet to the gas separator 402. The gas separator 402 is configured to separate the input gas stream into a hydrogen-rich output stream and an off-gas stream. The hydrogen-rich output stream is directed to a hydrogen output 422. The off-gas stream is directed by the gas separator 402 to an off-gas output 412, which is connected to an energy conversion system (ECS) 440. As described above, the energy conversion system 440 may take many different forms, but is adapted to extract electrical energy and thermal energy from the off-gas, and to return this energy via an energy output 442 back to power the biomass-based hydrogen production system, here illustrated by providing energy to the gas separator 402. Any remaining off-gas may be output via the off-gas output 444.

Figure 5 shows another embodiment of the system 400 that relates to the embodiment shown in figure 4. Therefore, only the differences are discussed here. In this embodiment, the pyrolysis reactor 202 and the gasification reactor 204 are provided as a combined reactor 206, having a pyrolysis zone 202' and a gasification zone 204'. Otherwise, the processes are equivalent to the embodiment of figure 4.

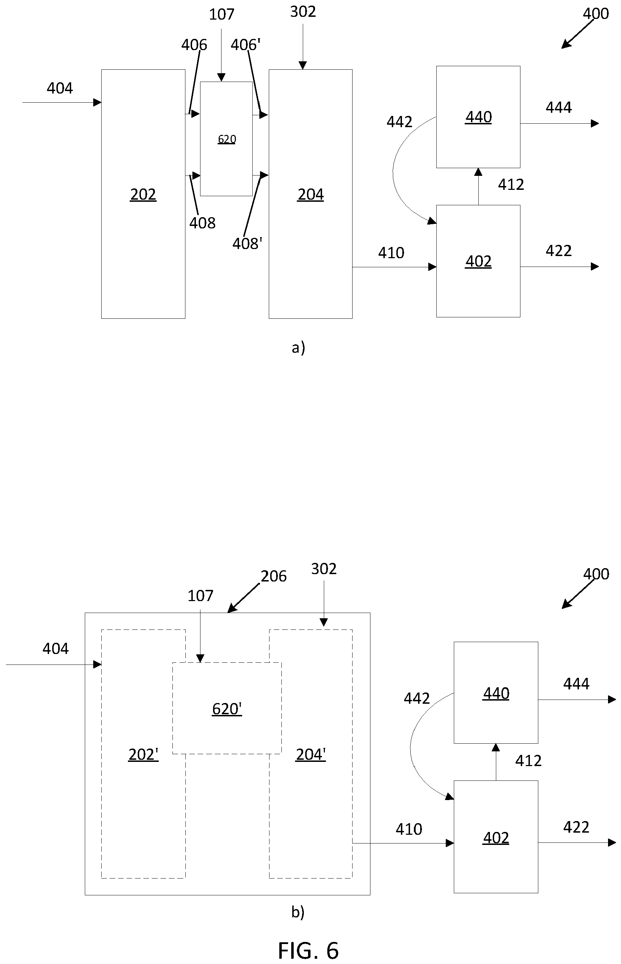

Figure 6a and 6b illustrate different embodiments of the system 400, in particular different configurations of an oxidation zone 620.

The embodiment shown in figure 6a corresponds to that of figure 4, where like reference numerals refer to like parts. This embodiment differs by comprising an oxidation zone 620 between the pyrolysis reactor 202 and the gasification reactor 204. The oxidation zone 620 is configured to allow for partial or full oxidation of the pyrolysis gas received via the pyrolysis gas outlet 406 by use of an oxidizing gas 107, before passing on the partially oxidized pyrolysis gas via a partially oxidized pyrolysis gas inlet 406' to the gasification reactor 204. The pyrolysis char passes from the pyrolysis reactor 202 via the pyrolysis char outlet 408, the oxidation zone 620, and pyrolysis char inlet 408' to the gasification reactor 204 for subsequent gasification by use of the partially oxidized pyrolysis gas. The oxidation zone 620 may be provided as a separate oxidation reactor, or as part of conduits from the pyrolysis reactor 202 to the gasification reactor 204.

The embodiment shown in figure 6b corresponds to that of figure 5, where like reference numerals refer to like parts. In this embodiment, the combined reactor 206 is further configured to provide an oxidation zone 620' between the pyrolysis zone 202' and the gasification zone 204'. As indicated in the figure, the oxidation zone 620' may partly overlap either the pyrolysis zone 202' and/or the gasification zone 204'. This embodiment is particularly energy efficient, since the heat from the pyrolysis in the pyrolysis zone 202' is efficiently transferred to the oxidation zone 620' and the gasification zone 204', and even further to the hydrotreatment reactor 402 as indicated by arrow 411.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Method of hydrogen production from a biomass-based synthesis gas in a biomass-based hydrogen production system, wherein the biomass-based hydrogen production system comprises a pyrolysis reactor and a gasification reactor, the method comprising:
- providing a biomass feedstock,
- pyrolysing the biomass feedstock in the pyrolysis reactor to produce a pyrolysis gas (PG) and a solid pyrolysis char (PC),
- at least partially oxidizing the pyrolysis gas into a oxidized pyrolysis gas by providing an oxidizing gas,
- gasifying the pyrolysis char in the gasification reactor using the partially oxidized pyrolysis gas to produce a synthesis gas (SG), the synthesis gas having a high content of hydrogen molecules, *H*₂,
- separating the synthesis gas (SG) into two streams, one being a hydrogen-rich stream (H2G) and the other being an off-gas (OG) stream, wherein the off-gas stream comprises hydrogen at a lower concentration than in the hydrogen-rich stream, and other synthesis gas (SG) elements,
- extracting mechanical energy (ME), electrical energy (EE) and/or thermal energy (TE) from the off-gas (OG) by way of an energy conversion system (ECS), and
- using said mechanical, electrical, and/or thermal energy (ME, EE, TE) to provide power to the biomass-based hydrogen production system.

2. The method according to claim 1, wherein the energy conversion system (ECS) comprises an internal combustion engine (ICE), and wherein the off-gas is used to fuel the internal combustion engine.

3. The method according to claim 1, wherein the energy conversion system (ECS) comprises a fuel cell (FC), and wherein the off-gas is used to fuel the fuel cell.

4. The method according to claim 1, wherein the energy conversion system (ECS) comprises an organic Rankine cycle (ORC), and wherein a temperature difference between the combusted off-gas and an ambient temperature is utilized to drive the organic Rankine cycle.

5. The method according to claim 1, wherein the energy conversion system (ECS) comprises combusting the off-gas by means of a burner section and utilizing the generated thermal energy for supplying heat to the biomass-based hydrogen production system.

6. The method according to any one of the preceding claims, wherein the electrical output (EE) from the energy conversion system is used for powering other electrical systems of the biomass-based hydrogen production system.

7. The method according to any one of the preceding claims, wherein the partially oxidized pyrolysis gas is used as primary gasification agent to gasify the pyrolysis char.

8. The method according to any one of claims 1-6, wherein the partially oxidized pyrolysis gas is used in conjunction with at least one other gasification agent to gasify the pyrolysis char.

9. The method according to claim 8, wherein the at least one other gasification agent comprises steam.

10. Biomass-based hydrogen production system, the system comprising:
- a pyrolysis reactor comprising a biomass feedstock inlet and a pyrolysis gas and char outlet, wherein the pyrolysis reactor is adapted for pyrolysis of a biomass feedstock into a pyrolysis gas and a pyrolysis char,
- a gasification reactor in communication with the pyrolysis gas and char outlet, the gasification reactor further comprising a synthesis gas outlet, wherein the gasification reactor is adapted for gasification of the pyrolysis char using the pyrolysis gas, to produce a synthesis gas exiting the gasification reactor via the synthesis gas outlet,
- a synthesis gas separator in communication with the synthesis gas outlet, wherein the synthesis gas separator is adapted for separating the synthesis gas into a hydrogen rich stream output via a hydrogen rich stream output, and an off-gas stream output via an off-gas output, wherein the synthesis gas separator is adapted to ensure during operation that the off-gas stream comprises hydrogen at a lower concentration than in the hydrogen rich stream, and
- an energy conversion system connected to the off-gas stream output, wherein the energy conversion system is adapted to generate mechanical energy, electrical energy, and/or thermal energy from the off-gas, and for providing said mechanical, electrical, and/or thermal energy to at least partly power the biomass-based hydrogen production system.

11. The biomass-based hydrogen production system according to claim 10, wherein the energy conversion system (ECS) comprises an internal combustion engine (ICE), and wherein the off-gas is used to fuel the internal combustion engine.

12. The biomass-based hydrogen production system according to any one of claims 10-11, wherein the energy conversion system (ECS) comprises a fuel cell (FC), and wherein the off-gas is used to fuel the fuel cell.

13. The biomass-based hydrogen production system according to any one of claims 10-12, wherein the energy conversion system (ECS) comprises an organic Rankine cycle (ORC), and wherein a temperature difference between the off-gas and an ambient temperature is utilized to drive the organic Rankine cycle.

14. The biomass-based hydrogen production system according to any one of claims 10-13, wherein the energy conversion system (ECS) comprises a burner section for combusting the off-gas, and wherein the generated thermal energy is utilizing for supplying heat to the biomass-based hydrogen production system.

15. The biomass-based hydrogen production system according to any one of claims 10-14, wherein the electrical output (EE) from the energy conversion system is used for powering other electrical systems of the biomass-based hydrogen production system.
